# EUROPEAN PATENT APPLICATION

(11) **EP 4 385 807 A1**
(43) Date of publication of application: **19.06.2024**
(21) Application number: 23199348.6
(22) Date of filing: 25.09.2023
(51) Int. Cl.: B60L 53/24, B60L 58/20

(54) **ELECTRIC VEHICLE AND CONTROL METHOD OF THE SAME**

(30) Priority: 14.12.2022 KR 20220175033
(71) Applicant: HYUNDAI MOTOR COMPANY, Seoul 06797 (KR); Kia Corporation, Seocho-gu Seoul 06797 (KR)
(72) Inventor: CHUN, Ho Tae, 18280 Hwaseong-si, Gyeonggi-do (KR); SHIN, Sang Cheol, 18280 Hwaseong-si, Gyeonggi-do (KR); YOON, Jae Hoon, 18280 Hwaseong-si, Gyeonggi-do (KR); JANG, Ji Woong, 18280 Hwaseong-si, Gyeonggi-do (KR); LEE, Yoo Jong, 18280 Hwaseong-si, Gyeonggi-do (KR); JOO, Jung Hong, 18280 Hwaseong-si, Gyeonggi-do (KR); LEE, Ki Jong, 18280 Hwaseong-si, Gyeonggi-do (KR); JEONG, Kang Ho, 18280 Hwaseong-si, Gyeonggi-do (KR)
(74) Representative: Viering, Jentschura & Partner mbB Patent- und Rechtsanwälte

(57) **Abstract**

An electric vehicle may include a motor system having a motor and an inverter, a main battery and an auxiliary battery, and a controller which controls the main battery to be charged by voltage step-up of power of the auxiliary battery through the motor system during driving of the electric vehicle, and controls the auxiliary battery to be charged by voltage step-down of power of the main battery through the motor system when charging the main battery through an external power source.

## Description

### Field

The present disclosure relates to an electric vehicle having a main battery and an auxiliary battery, and a control method of the same.

### Background

With the recent increase in interest in the environment, the number of electric vehicles equipped with an electric motor as a power source is increasing.

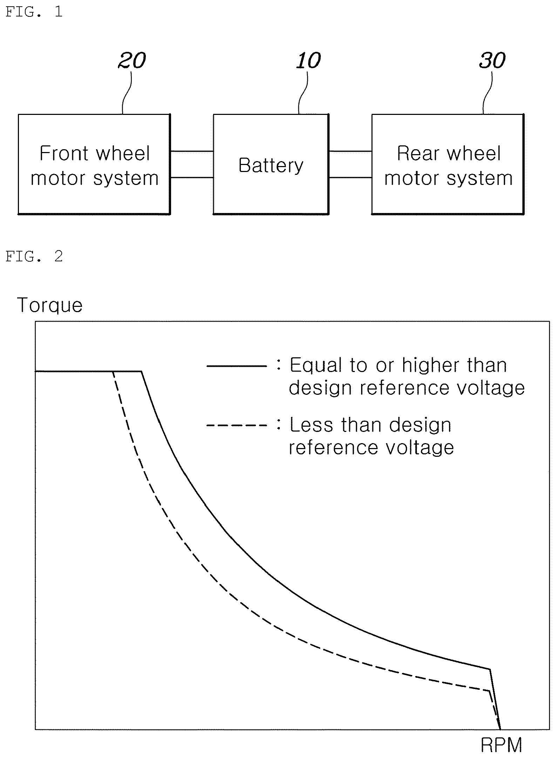

FIG. 1 illustrates an example of a structure of a general four-wheel drive electric vehicle.

Referring to FIG. 1, an electric vehicle may include a battery 10, a front wheel motor system 20 which is electrically connected to the battery 10 and drives a front wheel, and a rear wheel motor system 30 which is electrically connected to the battery 10 and drives a rear wheel. Accordingly, an electric vehicle can drive by driving at least one of the front wheel motor system 20 and the rear wheel motor system 30 with power supplied from the battery 10. For example, assuming that a main drive wheel is a rear wheel, the rear wheel motor system 30 is always activated while the vehicle is driving, and the front wheel motor system 20 is selectively activated for four-wheel drive.

Although a significant number of users of an electric vehicle have a short-distance urban driving pattern, the battery charging time of the electric vehicle is longer than the refueling time of an internal combustion engine vehicle, and thus the maximum driving distance of the electric vehicle which can be driven with one full charge of a battery is important. This driving distance is affected by the voltage and capacity of the battery. The capacity of the battery 10 is determined by the number of applied battery modules or cells, and even if the battery has the same capacity, a voltage thereof may be different depending on a combination of series/parallel connection between modules or cells.

Meanwhile, the voltage of the battery 10 is a major design factor that determines the output (i.e., torque and RPM) characteristics of a motor system. This will be described with reference to FIG. 2.

FIG. 2 is a diagram illustrating the output characteristics of the electric vehicle according to a battery voltage compared to a general design reference voltage.

Referring to FIG. 2, when the voltage of the battery is equal to or higher than the design reference voltage, the motor system of the electric vehicle can produce a maximum available power, but when the voltage of the battery is less than the design reference voltage, the available power is limited. The limitation of the available power causes the power performance of the electric vehicle to deteriorate. In order to solve this problem, a method of increasing the voltage of a battery may be considered, but when the voltage of the battery increases, the withstand voltage design of the motor system is required to be strengthened, so this method also has limitations.

As a result, when increasing the capacity of the battery to increase the driving distance of the electric vehicle, there is limitation that both the output reference voltage and withstand voltage reference voltage of the motor system are required to be satisfied.

### SUMMARY

Accordingly, the present disclosure has been made keeping in mind the above problems occurring in the related art, and the present disclosure is intended to propose an electric vehicle having a main battery and an auxiliary battery and a power management method for the same.

Particularly, the present disclosure is intended to propose an electric vehicle and a power management method for the same in which the main battery can be charged through the auxiliary battery without a separate means of raising a voltage.

Technical objectives to be achieved in the present disclosure are not limited to the technical objectives mentioned above, and other technical objectives not mentioned above will be clearly understood to those skilled in the art to which the present disclosure belongs from the following description.

In order to achieve the above objectives, according to one aspect of the present disclosure, there is provided an electric vehicle including: a motor system having a motor and an inverter; a main battery and an auxiliary battery; and a controller which controls the main battery to be charged by raising power of the auxiliary battery through the motor system during driving of the electric vehicle, and controls the auxiliary battery to be charged by decreasing power of the main battery through the motor system when charging the main battery through an external power source.

For example, the motor system may include: a first motor system which corresponds to a main drive wheel and has a first motor and a first inverter; and a second motor system which corresponds to an auxiliary drive wheel and has a second motor and a second inverter, wherein the main battery may be electrically connected to the first motor system and the second motor system, and the controller may control the main battery to be charged by raising a voltage of the auxiliary battery through the second motor system when the auxiliary battery is electrically connected to the second motor system in a two-wheel drive mode in which the main drive wheel is used.

For example, the electric vehicle may further include: a disconnector which is disposed between the auxiliary drive wheel and the second motor and selectively connects the auxiliary drive wheel to the second motor.

For example, the disconnector may disconnect the auxiliary drive wheel from the second motor in the two-wheel drive mode and may connect the auxiliary drive wheel to the second motor in a four-wheel drive mode.

For example, when the main battery is charged in the two-wheel drive mode, the second motor system may constitute a boost converter topology, and the first motor system may output driving force to the main drive wheel.

For example, in a four-wheel drive mode, the auxiliary battery may be electrically disconnected from the second motor system.

For example, in the four-wheel drive mode, each of the first motor system and the second motor system may output driving force.

For example, the motor system may include: a first motor system which corresponds to a main drive wheel and has a first motor and a first inverter; and a second motor system which corresponds to an auxiliary drive wheel and has a second motor and a second inverter, wherein the main battery may be electrically connected to the first motor system and the second motor system, and when an external DC charger is connected to the electric vehicle, according to a supply voltage of the external DC charger, the controller may control power of the external DC charger to be transmitted to the main battery or may control the power to be transmitted to the main battery after the power raises the supply voltage through the first motor system.

For example, when the power of the external DC charger passes through the first motor system, the first motor system may constitute a boost converter topology.

For example, when the auxiliary battery is connected to the second motor system, the controller may control the auxiliary battery to be charged after the power of the main battery is decreased through the second motor system.

For example, when the auxiliary battery is charged, the second motor system may constitute a buck converter topology.

For example, the electric vehicle may further include: a first switch including a first end connected to a positive (+) end of the external DC charger and a second end connected to a positive (+) end of the main battery; and a second switch including a first end connected to the positive (+) end of the external DC charger and a second end connected to the first motor system.

For example, the controller may short the first switch when the supply voltage is a first voltage corresponding to a voltage of the main battery, and may short the second switch when the supply voltage is a second voltage lower than the first voltage.

In addition, a control method of the electric vehicle according to one aspect of the present disclosure includes: controlling a main battery to be charged by raising power of an auxiliary battery through a motor system having a motor and an inverter during driving of the electric vehicle; and controlling the auxiliary battery to be charged by decreasing power of the main battery through the motor system when charging the main battery through an external power source.

For example, the motor system may include: a first motor system which corresponds to a main drive wheel and has a first motor and a first inverter; and a second motor system which corresponds to an auxiliary drive wheel and has a second motor and a second inverter, wherein the main battery may be electrically connected to the first motor system and the second motor system, and the controlling of the main battery to be charged may include controlling the main battery to be charged by raising a voltage of the auxiliary battery through the second motor system when the auxiliary battery is electrically connected to the second motor system in a two-wheel drive mode in which the main drive wheel is used.

For example, the method may further include: allowing the second motor system to constitute a boost converter topology, and allowing the first motor system to output driving force to the main drive wheel when the main battery is charged in the two-wheel drive mode.

For example, in the four-wheel drive mode, the auxiliary battery may be electrically disconnected from the second motor system.

For example, the motor system may include: a first motor system which corresponds to a main drive wheel and has a first motor and a first inverter; and a second motor system which corresponds to an auxiliary drive wheel and has a second motor and a second inverter, wherein the main battery may be electrically connected to the first motor system and the second motor system, and the controlling of the auxiliary battery to be charged may include controlling power of an external DC charger to be transmitted to the main battery or controlling the power of the external DC charger to be transmitted to the main battery after the power raises a supply voltage of the external DC charger through the first motor system according to the supply voltage when the external DC charger is connected to the electric vehicle.

For example, the controlling of the auxiliary battery to be charged may further include controlling the auxiliary battery to be charged after the power of the main battery is decreased through the second motor system when the auxiliary battery is connected to the second motor system.

For example, the electric vehicle may include: a first switch including a first end connected to a positive (+) end of the external DC charger and a second end connected to a positive (+) end of the main battery; and a second switch including a first end connected to the positive (+) end of the external DC charger and a second end connected to the first motor system, wherein the controlling of the auxiliary battery to be charged may further include: shorting the first switch when the supply voltage is a first voltage corresponding to a voltage of the main battery; and shorting the second switch when the supply voltage is a second voltage lower than the first voltage.

According to the embodiment of the present disclosure described above, the electric vehicle has the auxiliary battery together with the main battery, thereby preventing unnecessary increase in vehicle price or weight.

In addition, it is possible to charge the main battery by raising the power of the installed auxiliary battery by using a means suitable for a situation of the vehicle.

Effects obtainable from the present disclosure are not limited to the effects described above, and other effects not described above will be clearly appreciated from the following description by those skilled in the art.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 illustrates an example of a structure of a general four-wheel drive electric vehicle;
FIG. 2 is a diagram illustrating the output characteristics of the electric vehicle according to a battery voltage compared to a general design reference voltage;
FIG. 3 illustrates an example of the structure of the electric vehicle according to an exemplary embodiment of the present disclosure;
FIG. 4 is a diagram illustrating the electrical connection state of the electric vehicle according to an exemplary embodiment of the present disclosure;
FIGS. 5A and 5B are diagrams illustrating the principle of raising a voltage by using a motor according to an exemplary embodiment of the present disclosure;
FIG. 6 is a diagram illustrating the electrical connection state of the electric vehicle during four-wheel-drive driving of the electric vehicle according to an exemplary embodiment of the present disclosure;
FIG. 7 is a diagram illustrating the electrical connection state of the electric vehicle during two-wheel-drive driving of the electric vehicle according to an exemplary embodiment of the present disclosure; and
FIG. 8 is a diagram illustrating the electrical connection state of the electric vehicle when charging the electric vehicle by using external power according to an exemplary of the present disclosure.

### DETAILED DESCRIPTION

Hereinafter, embodiments disclosed in the present specification will be described in detail with reference to the accompanying drawings, but the same or similar components regardless of reference numerals are assigned the same reference numerals, and overlapping descriptions thereof will be omitted. Terms "module" and "part" for components used in the following description are given or mixed in consideration of only the ease of writing the specification, and do not have distinct meanings or roles by themselves. In addition, when it is determined that detailed descriptions of related known technologies may obscure the gist of the embodiments disclosed in this specification in describing the embodiments disclosed in the present specification, the detailed description thereof will be omitted. In addition, the accompanying drawings are only for easily understanding the embodiments disclosed in this specification, and do not limit the technical idea disclosed herein, and should be understood to cover all modifications, equivalents or substitutes falling within the spirit and scope of the present disclosure.

Terms including an ordinal number, such as first and second, etc., may be used to describe various elements, but the elements are not limited by the terms. The terms are used only for the purpose of distinguishing one element from another.

It should be understood that when an element is referred to as being "coupled" or "connected" to another element, it may be directly coupled or connected to the another element, or intervening elements may be present therebetween. On the other hand, it should be understood that when an element is referred to as being "directly coupled" or "directly connected" to another element, there are no intervening elements present.

Singular forms include plural forms unless the context clearly indicates otherwise.

In the present specification, it should be understood that terms such as "comprises" or "have" are intended to designate that features, numbers, steps, operations, components, parts, or combinations thereof described in the specification exist, but do not preclude the possibility of the existence or addition of one or more other features, numbers, steps, operations, components, parts, or combinations thereof.

In addition, the terms "unit" and "control unit" included in the names "hybrid control unit (HCU)" and "vehicle control unit (VCU)" are only terms widely used in the naming of a controller that controls the specific function of a vehicle, but do not mean a generic function unit. For example, each control unit may include a communication device which communicates with other control units or sensors for controlling a function in charge, a memory which stores an operating system, a logic command, or input/output information, and at least one processor which performs judgment, calculation, and determination necessary for controlling the function in charge.

According to an exemplary embodiment of the present disclosure, an electric vehicle uses an auxiliary battery together with a main battery such that the auxiliary battery is selectively charged or discharged according to the condition of the vehicle.

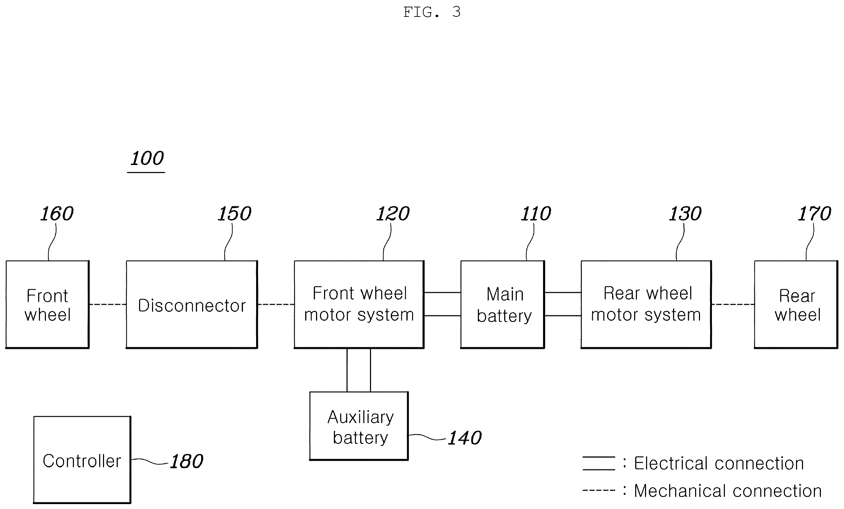

First, the configuration of the electric vehicle according to the embodiment will be described with reference to FIG. 3.

FIG. 3 illustrates an example of the structure of the electric vehicle according to an exemplary embodiment of the present disclosure.

Referring to FIG. 3, the electric vehicle 100 according to an exemplary embodiment of the present disclosure may include a main battery 110, a front wheel motor system 120, a rear wheel motor system 130, the auxiliary battery 140, a disconnector 150, a front wheel 160, a rear wheel 170, and a controller 180.

FIG. 3 indicates mainly components related to the present embodiment, and of course, fewer or more components may be included in the actual implementation of the vehicle. For convenience, in the electric vehicle illustrated in FIG. 3, the rear wheel 170 is a main drive wheel and the front wheel 160 is an auxiliary drive wheel, but this is an example and the main drive wheel and the auxiliary drive wheel may be interchanged. However, in any case, the disconnector 150 is preferably disposed at a side of the auxiliary drive wheel.

Hereinafter, each component will be described in detail.

The main battery 110 may be electrically connected to the front wheel motor system 120 and the rear wheel motor system 130 to exchange power therewith.

The auxiliary battery 140 may be electrically connected to the front wheel motor system 120. In this case, according to the embodiment, the auxiliary battery 140 may be detachably connected to the front wheel motor system 120 through a connector (not shown), but is not necessarily limited thereto.

In addition, the auxiliary battery 140 may have a lower capacity and lower voltage than the main battery 110 for miniaturization, but is not necessarily limited thereto.

Furthermore, when the auxiliary battery 140 is detachably provided, the auxiliary battery 140 may be mounted on the roof of the electric vehicle or accommodated in a space in a trunk or under a vehicle, or may be connected to the electric vehicle in the form of a trailer by having a separate wheel. However, this is illustrative, and the auxiliary battery 140 is not necessarily limited thereto.

Each of the front wheel motor system 120 and the rear wheel motor system 130 may include an inverter which converts power of the main battery 110 into multi-phase (e.g., three-phase) AC power, and a multi-phase motor driven by AC power output by the inverter.

A front wheel motor provided in the front wheel motor system 120 may selectively be connected mechanically to the front wheel 160 by the disconnector 150. For example, the disconnector 150 may mechanically connect the front wheel 160 to the front wheel motor when the electric vehicle 100 is driven in four-wheel drive, and may mechanically disconnect the front wheel 160 from the front wheel motor when the electric vehicle 100 is driven in two-wheel drive.

A rear wheel motor of the rear wheel motor system 130 may be constantly connected to the rear wheel 170, and a reducer and/or a differential gear may be disposed between the rear wheel motor and the rear wheel 170.

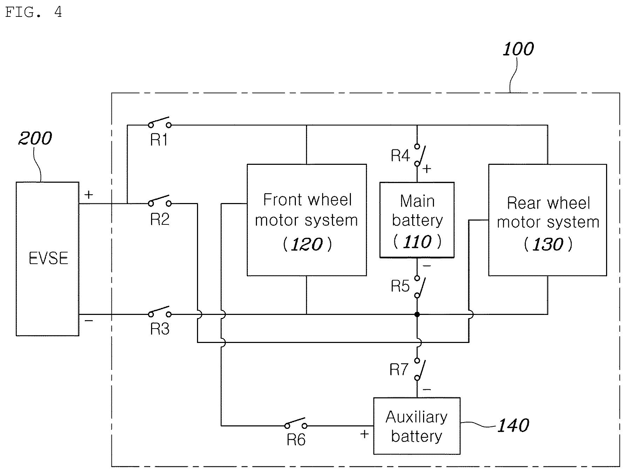

Meanwhile, the controller 180 may control the state of the disconnector according to a drive mode (a four-wheel or two-wheel drive mode), and may obtain information (a temperature, a voltage, a current, a charge state, and a state of durability, etc.) of the main battery 110 and the auxiliary battery 140 so as to perform power management. In addition, the controller 180 may distribute torque to each of the front wheel motor system 120 and the rear wheel motor system 130 according to a required driving force or a required amount of regenerative braking, and may control each of the systems 120 and 130 to execute the distributed torque. Particularly, in relation to this embodiment, the controller 180 may determine whether to charge/discharge the auxiliary battery 140 according to the conditions of the vehicle (two-wheel drive, four-wheel drive, and charging by using external power, etc.), and accordingly, may control a plurality of switches (e.g., relays or power semiconductors) to be described later with reference to FIG. 4 and the drawings below FIG. 4 and each of the motor systems 120 and 130.

To this end, the controller 180 may be connected to associated components by a predetermined vehicle communication protocol (e.g., a controller area network (CAN)) so that the controller 180 can control the main battery 110, the front wheel motor system 120, the rear wheel motor system 130, the auxiliary battery 140, and the disconnector 150. Here, that the controller 180 controls each of the batteries 110 and 140 may mean that the controller 180 communicates with a battery controller (e.g., a battery management system (BMS) (not shown)) provided in each of the batteries 110 and 140.

Furthermore, when an EVSE 200 to be described later is connected to the electric vehicle, the controller 180 may determine the supply voltage of the EVSE 200.

In the embodiment, the controller 40 may be configured as a single controller or a plurality of controllers having distributed functions. For example, the controller 40 may be configured as a combination of a motor control unit (MCU) which controls the motor of the motor system 30 and a control unit superior thereto (e.g., a hybrid control unit (HCU), a vehicle control unit (VCU), and a hydrogen fuel cell control unit (FCCU), etc.), but is not necessarily limited thereto. According to another embodiment, the controller 40 may further include a charge controller.

FIG. 4 is a diagram illustrating the electrical connection state of the electric vehicle according to an exemplary embodiment of the present disclosure.

Referring to FIG. 4, the electric vehicle 100 may be connected to an external charger (hereinafter, referred to as the electric vehicle supply equipment (EVSE) 200) through the connector (not shown). The EVSE 200 may supply direct current power especially for fast charging. In this case, the EVSE 200 may have a supply voltage lower than the voltage of the main battery 110 or may have a voltage corresponding to the voltage of the main battery 110. For example, when the main battery 110 is 800V, the EVSE 200 may have the supply voltage of 400V or 800V depending on the type of the EVSE 200.

Three switches R1, R2, and R3 may be disposed between the electric vehicle 100 and the EVSE 200. One switch R3 of the three switches may be disposed between the negative (-) end of the EVSE 200 and the negative (-) end of a power electric (PE) system of the electric vehicle, and the remaining two switches R1 and R2 may be disposed at a side of the positive (+) end of the EVSE 200.

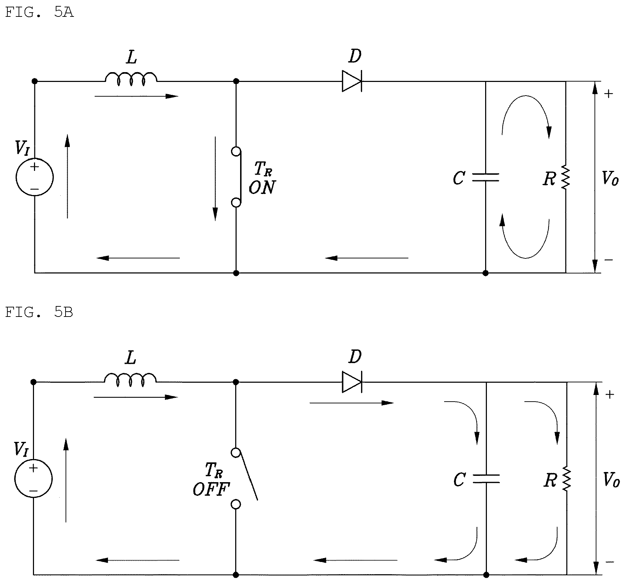

When the EVSE 200 and the electric vehicle 100 are connected to each other for charging the electric vehicle 100, a third switch R3 is shorted regardless of the supply voltage of the EVSE 200. A first switch R1 disposed at a side of the positive (+) end of the main battery 110 may be shorted when the supply voltage corresponds to the voltage of the main battery 110, and a second switch R2 disposed at a side of the rear wheel motor system 130 may be shorted when the supply voltage is lower than the voltage of the main battery 110. That is, when the supply voltage corresponds to the voltage of the main battery 110, the first switch R1 may be shorted, and thus the main battery 110 may be immediately charged with power supplied from the EVSE 200. Unlike this, when the supply voltage is lower than the voltage of the main battery 110, the second switch R2 is shorted, and power supplied from the EVSE 200 passes through the rear wheel motor system 130. A reason why the power supplied from the EVSE 200 passes through the rear wheel motor system 130 will be described later with reference to FIGS. 5A and 5B.

Meanwhile, a fourth switch R4 and a fifth switch R5 may be disposed respectively on the positive (+) end and the negative (-) end of the main battery 110. In addition, the sixth switch R6 and a seventh switch R7 may be disposed respectively on the positive (+) end and the negative (-) end of the auxiliary battery 140.

Accordingly, when the fourth switch R4 and the fifth switch R5 are shorted, power of the main battery 110 may be supplied to the front wheel motor system 120 and the rear wheel motor system 130. In addition, when the sixth switch R6 and the seventh switch R7 are shorted, the auxiliary battery 140 may be electrically connected to the front wheel motor system 120.

Meanwhile, when the front wheel motor of the front wheel motor system 120 is not operating, the voltage of the auxiliary battery 140 may be raised (i.e., voltage step-up) through the front wheel motor to charge the main battery 110. In addition, when the supply voltage of the EVSE 200 is lower than the voltage of the main battery 110, the second switch R2 and the third switch R3 may be shorted, and the supply voltage of the EVSE 200 may be raised through the rear wheel motor of the rear wheel motor system 130 so that the main battery 110 is charged. This voltage step-up through a motor may be achieved through a boost converter topology. The principle will be described with reference to FIGS. 5A and 5B.

FIGS. 5A and 5B are diagrams illustrating the principle of raising a voltage by using a motor according to an exemplary embodiment of the present disclosure.

First, referring to FIG. 5A, a simplified circuit diagram of a boost converter including the inverter and the motor is shown. In the circuit diagram of FIG. 5A, an input voltage V_{I} corresponds to the voltage of the auxiliary battery 140 or the supply voltage of the EVSE 200 depending on a situation, and V_{O} as an output voltage of the boost converter corresponds to a voltage supplied to the main battery 110. In addition, an inductor L may correspond to a coil for any one phase of a motor, and according to the switching operation of the inverter, it may be determined that a coil for which phase of a plurality of phases corresponds to the inductor L. Remaining components, for example, a switch TR, a diode D, and a condenser C, etc. may be some components of the motor system, but are not necessarily limited thereto, but are not necessarily limited thereto. That is, it is obvious that those skilled in the art may properly configure circuits illustrated in FIGS. 5A and 5B in various methods, such as each component may be configured as an element separate from elements constituting the inverter.

As illustrated in FIG. 5A, when the switch T_{R} is turned on, a current flows in the inductor L to be accumulated therein, and energy stored in the condenser C is consumed in a load-side resistance R. In this case, the diode D can block the charge of the condenser C from flowing to the switch T_{R}.

An operation after energy is accumulated in the inductor L will be described with reference to FIG. 5B. Referring to FIG. 5B, as the switch T_{R} turns off, energy accumulated in the inductor L is added to the input voltage V_{I}, and thus a voltage passing through the diode D is V_{I}+V_{L}. That is, the output voltage V_{O} is the input voltage plus the energy voltage accumulated in the inductor, and as a result, the input voltage is raised and transmitted to an output end.

Hereinafter, based on the configuration of the electric vehicle described above, the state of a circuit configuration for each situation will be described.

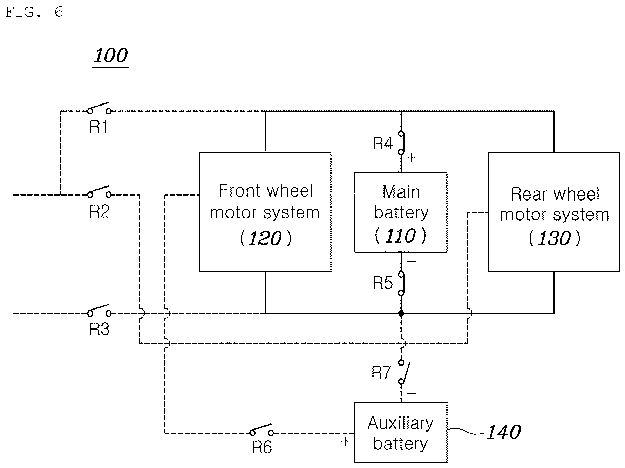

FIG. 6 is a diagram illustrating the electrical connection state of the electric vehicle during four-wheel-drive driving of the electric vehicle according to an exemplary embodiment of the present disclosure.

Referring to FIG. 6, during four-wheel drive driving, both the front wheel motor system 120 and the rear wheel motor system 130 may output driving force to each driving wheel. In this situation, since it is difficult to use any motor to configure the boost converter topology, the sixth switch R6 and the seventh switch R7 are opened, and the fourth switch R4 and the fifth switch R5 are shorted. Accordingly, the main battery 110 is electrically connected to the front wheel motor system 120 and the rear wheel motor system 130, and the auxiliary battery 140 is disconnected from the PE system. In this situation, the disconnector 150 is connected to the front wheel 160 and the front wheel motor system 120, and thus the front wheel 160 and the front wheel motor of the front wheel motor system 120 are mechanically connected to each other as described above.

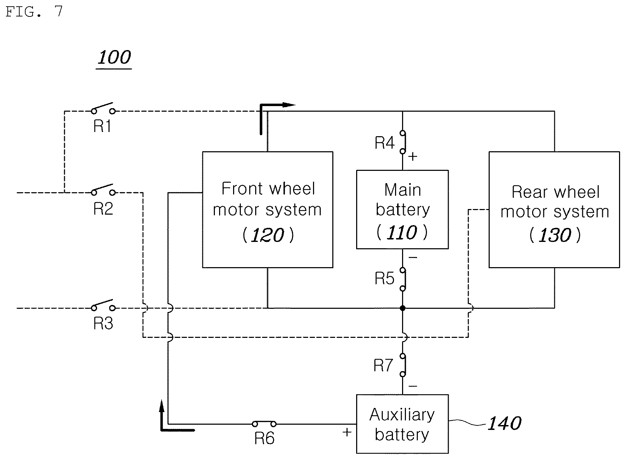

FIG. 7 is a diagram illustrating the electrical connection state of the electric vehicle during two-wheel-drive driving of the electric vehicle according to an exemplary embodiment of the present disclosure.

Referring to FIG. 7, during two-wheel-drive driving, the disconnector 150 mechanically disconnects the front wheel 160 from the front wheel motor of the front wheel motor system 120. Accordingly, since the front wheel motor system 120 is not used to provide driving force to the front wheel 160, the front wheel motor of the front wheel motor system 120 may be used to configure a boost converter topology.

In this case, the sixth switch R6 and the seventh switch R7 are shorted so that the auxiliary battery 140 is electrically connected to the front wheel motor system 120, and the voltage of the auxiliary battery 140 is raised by a boost converter topology including the front wheel motor system 120 so that the main battery 110 can be charged. In FIG. 7, the power supply path of the auxiliary battery 140 is indicated by an arrow. Accordingly, during two-wheel drive driving, the main battery 110 may be charged with the power of the auxiliary battery 140.

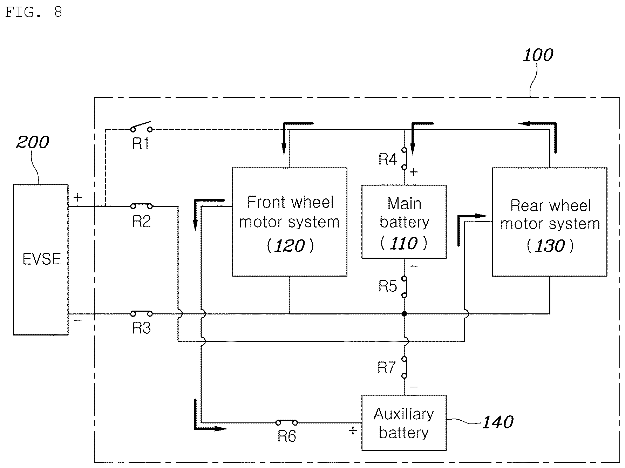

FIG. 8 is a diagram illustrating the electrical connection state of the electric vehicle when charging the electric vehicle by using external power according to an exemplary embodiment of the present disclosure.

In FIG. 8, it is assumed that the supply voltage of the EVSE 200 is lower than the voltage of the main battery 110.

Referring to FIG. 8, the EVSE 200 is connected to the electric vehicle 100, and the supply voltage is lower than the voltage of the main battery 110, and thus the third switch R3 and the second switch R2 may be shorted. Accordingly, power supplied from the EVSE 200 is transmitted to the rear wheel motor system 130, and after the power is raised by a boost converter topology including the rear wheel motor system 130, the main battery 110 may be charged with the power.

In this case, when the sixth switch R6 and the seventh switch R7 are shorted, the voltage of the main battery 110 is decreased (i.e., voltage step-down) by a buck converter topology including the front wheel motor system 120 (particularly, the coil of the front wheel motor is used as the inductor) so that the auxiliary battery 140 can be charged. Here, since the principle of the buck converter topology is obvious to those skilled in the art, a separate description thereof will be omitted.

Meanwhile, in the embodiments described above, the auxiliary battery 140 has been described as electrically connectable to the front wheel motor system 120, but unlike this, the auxiliary battery 140 may be electrically connected to the rear wheel motor system 130, or to all of the two motor systems 120 and 130. When the auxiliary battery 140 is electrically connected to the rear wheel motor system 130 or to all of the two motor systems 120 and 130, as the external charger is connected to the electric vehicle, the supplied voltage of the external charger is raised (i.e., step-up) through the front wheel motor system 120 to charge the main battery 110, and the voltage of the power supplied from the main battery 110 is decreased (i.e., step-down) through the rear wheel motor system 130 to charge the auxiliary battery 140.

When the main battery 110 and the auxiliary battery 140 are electrically connected to the same motor system, during driving of the electric vehicle, the power of the main battery 110 may be used to drive the motor of the motor system, and power of the auxiliary battery 140 may be transmitted to the main battery 110 as a DC component during PWM control of the motor so that the main battery 110 can be charged.

According to the embodiments of the present disclosure described so far, the main battery 110 maintains a voltage specification optimized for the high-voltage PE system of the electric vehicle, and at the same time, the charging/discharging of the auxiliary battery for increasing a driving distance may be performed through the configuration of the boost converter topology/buck converter topology of the motor system, so a power conversion device such as a separate bi-directional converter is not required.

Meanwhile, the above-described present disclosure may be implemented as a computer-readable code on a medium on which a program is recorded. Computer-readable media include all types of recording devices in which data that can be read by a computer system are stored. Examples of the computer-readable media include a hard disk drive (HDD), a solid state disk (SSD), a silicon disk drive (SDD), ROM, RAM, CD-ROM, a magnetic tape, a floppy disk, and an optical data storage device, etc. Accordingly, the above detailed description should not be construed as limiting in all respects and should be considered illustrative. The scope of the present disclosure should be determined by reasonable interpretation of the appended claims, and all changes within the equivalent scope of the present disclosure are included in the scope of the present disclosure.

## Claims

1. An electric vehicle (100) comprising:
a motor system (120, 130) having a motor and an inverter;
a main battery (110) and an auxiliary battery (140); and
a controller (180) configured to control the main battery to be charged by voltage step-up of power of the auxiliary battery through the motor system during driving of the electric vehicle, and to control the auxiliary battery to be charged by voltage step-down of power of the main battery through the motor system when charging the main battery through an external power source (200) .

2. The electric vehicle of claim 1, wherein the motor system comprises:
a first motor system which corresponds to a main drive wheel and has a first motor and a first inverter; and
a second motor system which corresponds to an auxiliary drive wheel and has a second motor and a second inverter,
wherein the main battery is electrically connected to the first motor system and the second motor system, and
the controller is further configured to control the main battery to be charged by the voltage step-up through the second motor system when the auxiliary battery is electrically connected to the second motor system in a two-wheel drive mode in which the main drive wheel is used.

3. The electric vehicle of claim 2, further comprising:
a disconnector disposed between the auxiliary drive wheel and the second motor, the disconnector being configured to selectively connect the auxiliary drive wheel to the second motor.

4. The electric vehicle of claim 3, wherein the disconnector is further configured to disconnect the auxiliary drive wheel from the second motor in the two-wheel drive mode and to connect the auxiliary drive wheel to the second motor in a four-wheel drive mode.

5. The electric vehicle of one of claims 2-4, wherein when the main battery is charged in the two-wheel drive mode, the second motor system provides a boost converter topology, and the first motor system outputs driving force to the main drive wheel.

6. The electric vehicle of one of claims 2-5, wherein in a four-wheel drive mode, the auxiliary battery is electrically disconnected from the second motor system.

7. The electric vehicle of claim 6, wherein in the four-wheel drive mode, each of the first motor system and the second motor system outputs driving force.

8. The electric vehicle of any one of the preceding claims, wherein the motor system comprises:
a first motor system which corresponds to a main drive wheel and has a first motor and a first inverter; and
a second motor system which corresponds to an auxiliary drive wheel and has a second motor and a second inverter,
wherein the main battery is electrically connected to the first motor system and the second motor system, and
when an external DC charger is connected to the electric vehicle, according to a supply voltage of the external DC charger, the controller is further configured to control power of the external DC charger to be transmitted to the main battery or to control the power of the external DC charger to be transmitted to the main battery after the supply voltage of the external DC charger is stepped up through the first motor system.

9. The electric vehicle of claim 8, wherein when the power of the external DC charger passes through the first motor system, the first motor system provides a boost converter topology.

10. The electric vehicle of claim 8 or 9, wherein when the auxiliary battery is connected to the second motor system, the controller is further configured to control the auxiliary battery to be charged after the power of the main battery is stepped down through the second motor system.

11. The electric vehicle of one of claims 8-10, wherein when the auxiliary battery is charged, the second motor system provides a buck converter topology.

12. The electric vehicle of one of claims 8-11, further comprising:
a first switch including a first end connected to a positive (+) end of the external DC charger and a second end connected to a positive (+) end of the main battery; and
a second switch which including a first end connected to the positive (+) end of the external DC charger and a second end connected to the first motor system,
wherein the controller is further configured to short the first switch when the supply voltage is a first voltage corresponding to a voltage of the main battery, and to short the second switch when the supply voltage is a second voltage lower than the first voltage.

13. The electric vehicle of any one of the preceding claims, wherein the motor system comprises:
a first motor system which corresponds to a main drive wheel and has a first motor and a first inverter; and
a second motor system which corresponds to an auxiliary drive wheel and has a second motor and a second inverter,
wherein the main battery is electrically connected to the first motor system, and the auxiliary battery is electrically connected to the second motor system, and
when an external DC charger is connected to the electric vehicle, according to a supply voltage of the external DC charger, the controller is further configured to control power of the external DC charger to be transmitted to the main battery, or to control the power of the external DC charger to be transmitted to the main battery after the supply voltage of the external DC charger is stepped up through the second motor system, and to control the auxiliary battery to be charged after the power of the main battery is stepped down through the first motor system.

14. A control method of an electric vehicle (100), the method comprising:
controlling a main battery (110) to be charged by voltage step-up of power of an auxiliary battery (140) through a motor system (120, 130) having a motor and an inverter during driving of the electric vehicle; and
controlling the auxiliary (140) battery to be charged by voltage step-down of power of the main battery (110) through the motor system (120, 130) when charging the main battery (110) through an external power source (200).

15. The method of claim 14, wherein the motor system comprises:
a first motor system which corresponds to a main drive wheel and has a first motor and a first inverter; and
a second motor system which corresponds to an auxiliary drive wheel and has a second motor and a second inverter,
wherein the main battery is electrically connected to the first motor system and the second motor system, and
the controlling of the main battery to be charged comprises controlling the main battery to be charged by the voltage step-up through the second motor system when the auxiliary battery is electrically connected to the second motor system in a two-wheel drive mode in which the main drive wheel is used.
